# EUROPEAN PATENT APPLICATION

(11) **EP 1 770 391 A2**
(43) Date of publication of application: **04.04.2007**
(21) Application number: 06119708.3
(22) Date of filing: 29.08.2006
(51) Int. Cl.: G01N 27/407

(54) **Solid electrolyte gas sensor**

(30) Priority: 29.08.2005 JP 2005248199; 10.11.2005 JP 2005326209
(71) Applicant: SHINKO ELECTRIC INDUSTRIES CO., LTD., Nagano-shi, Nagano 381-2287 (JP)
(72) Inventor: Suganuma, Shigeaki, Nagano Nagano 381-2287 (JP); Watanabe, Misa, Chandler, AZ 85226 (US); Yoshiike, Jun, Nagano Nagano 381-2287 (JP)
(74) Representative: Finnie, Peter John

(57) **Abstract**

A solid electrolyte gas sensor of the invention includes a sensor main body S3 having a solid electrolyte board 10, a gas detecting electrode layer (auxiliary electrode layer) 12 formed on one face of the board, and a reference electrode 14 formed on a face thereof on a side opposed to the one face, and a supporting member provided at the sensor main body, and a first and a second conductive member rod 15-1, 15-2 connected to the respective electrodes are adopted as the supporting members. Or, in place of the conductive member rod, as the supporting member rod, an insulating tube for inserting a lead wire, or a rod-like member formed integrally with the sensor main body and extended in one direction can be adopted.

## Description

### BACKGROUND OF THE INVENTION

The present invention relates to a solid electrolyte gas sensor, particularly relates to a solid electrolyte gas sensor utilizing a solid electrolyte board, forming a gas sensor main body capable of detecting a sulfur content by a small size, thereby, dispensing with a special constitution of holding the sensor and simplifying to maintain a measured temperature related to the sensor main body.

In a background art, a solid electrolyte material is known to be provided with a characteristic of a high ionic conduction property and is utilized for a gas sensor for detecting a specific gas component by utilizing the conduction characteristic. For example, zirconia ceramics is provided with a property of conducting oxygen ion and therefore, zirconia ceramics is provided with adaptability as an oxygen gas sensor and is used as a sensor for detecting an oxygen concentration. Further, by providing a board by the solid electrolyte material with sulfate or carbonate as a gas detecting electrode layer (auxiliary electrode layer), a gas sensor for detecting SOx gas or COx gas can be constituted.

When a gas sensor for detecting SOx gas or COx gas is constituted by a board comprising the solid electrolyte material, one face of the board is formed with a auxiliary electrode layer by sulfate or carbonate, an electrode by platinum or the like is provided on the auxiliary electrode layer, further, a side of other face of the board is provided with a reference electrode by platinum or the like. When the gas sensor constituted in this way is exposed to a gas to be detected under a predetermined temperature environment, an electromotive force is generated between the electrode and the reference electrode, and presence of a gas component can be detected by detecting the electromotive force.

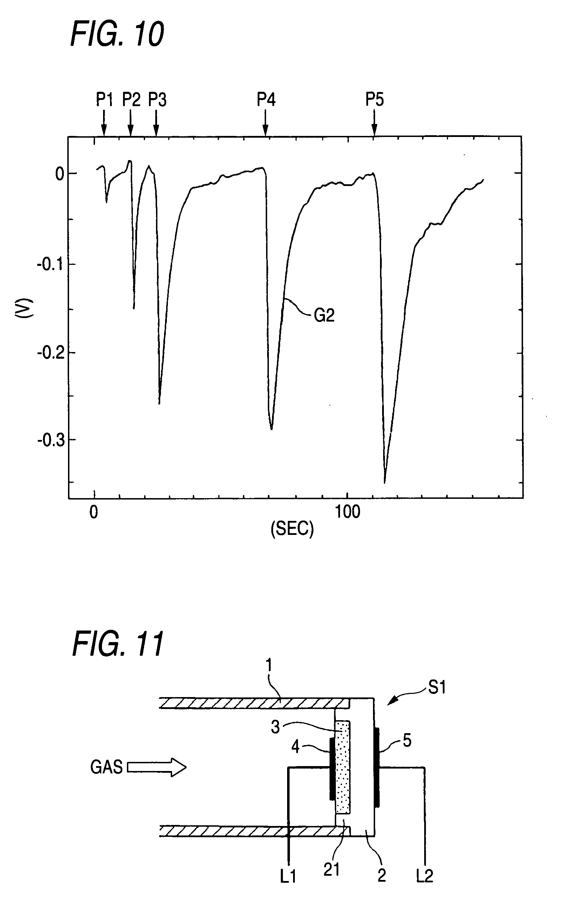

Hence, a gas sensor using a solid electrolyte board capable of detecting SOx gas component has already been developed (refer to, for example, Patent Reference 1). In a gas sensor main body S1 for detecting SOx shown in Fig. 11, there is used a ceramic board comprising a ceramic material having an oxide iron conduction property, and, for example, yttria stabilized zirconia ceramic (YSZ ceramic) is used for a material thereof. At the ceramic board 2, an electrode 4 is provided at a auxiliary electrode layer 3 formed at a side face thereof in contact with SOx gas. Further, a side face of the gas sensor in contact with air is formed with a reference electrode 5.

Further, the electrode 4 and the reference electrode 5 are connected with lead wires L1, L2 comprising platinum wires to be able to measure a potential difference between the electrode 4 and the reference electrode 5. In such a gas sensor main body S1 for detecting SOx, the auxiliary electrode layer 3 is formed at inside of a projected portion 21 projected from the side face of the YSZ ceramic board 2 in contact with SOx gas and is mixed with silver and silver sulfate. The projected portion 21 may integrally be formed with the ceramic board 2 by the same material, or may be formed separately from the ceramic board.

Further, the electrode 4 is a platinum net member constituted by welding one end of the platinum wire of the lead wire L1 to a platinum net member embedded in the auxiliary electrode layer 3, and the reference electrode 5 comprises a platinum net member constituted by welding one end of the platinum wire of the lead wire L2 to a platinum layer formed at the side face of the YSZ ceramic board 2 in contact with air by sputtering or the like.

In fabricating the auxiliary electrode layer 3 of a gas sensor for detecting SOx shown in Fig.11, silver paste is coated on an inner side of the projected portion 21 in a ring-like shape provided at the side face of the YSZ ceramic board 2 in contact with SOx gas to form a silver paste layer, thereafter, the silver paste layer is baked at a temperature equal to or lower than a melting temperature of silver, specifically, a temperature equal to or lower than 750°C, and a binder included in the silver paste is removed to thereby form a silver layer comprising silver. At this occasion, the silver layer integrally embedded with the electrode 4 can be formed by baking the silver paste layer embedded with the electrode 4 comprising the platinum net member welded with one end of the platinum wire at a vicinity of a surface layer thereof. Further, the auxiliary electrode layer 3 mixed with silver and silver sulfate can be formed by maintaining the silver layer at about 600°C while being brought into contact with SO₃ gas to be subjected to ageing for about several tens hours.

In the gas sensor main body S1 for detecting SOx constituted as described above, there is produced a reversible reaction of (2Ag+SO₃+ 1/2O₂) and (Ag₂SO₄). It seems that at a silver phase of the auxiliary electrode layer 3, there is produced a reversible reaction of (2Ag) and (2Ag⁺+2e⁻) and at a silver sulfate phase there is produced a reversible reaction of (SO₃+2Ag⁺O²⁻) and (Ag₂SO₄). Further, in the ceramic board 2, there is produced a reversible reaction of (1/20₂+2e⁻) and (O²⁻) and therefore, an electromotive force is generated between the lead wires L1 and L2 connected to the electrode 4 and the reference electrode 5.

Further, by welding the platinum wire to the electrode 4 comprising the platinum net member, SO₂ gas or the like can sufficiently be converted into SO₃ gas by constituting a catalyst by platinum and therefore, an SOx gas concentration can accurately be measured. Further, the platinum net member forming the reference electrode 5 accelerates the reversible reaction of (1/2 O₂+2e⁻) and (O²⁻).

According to the gas sensor main body S1 for detecting SOx fabricated as described above, as shown by Fig.11, one end face of a cylindrical member 1 made of ceramic is brought into contact with an outer peripheral edge portion of the YSZ ceramic board 2 and a face thereof on a side of being brought into contact with SOx gas and is sealed by glass. SO₂ gas or the like in SOx gas introduced into the cylindrical member 1 from an arrow mark direction indicated in Fig. 11 can be converted into SO₃ gas by providing a platinum net at a middle of the cylindrical member 1.

Hence, when SOx gas is introduced from the arrow mark direction to the cylindrical member 1 mounted with the YSZ ceramic board 2 while maintaining the gas sensor main body at 600°C, by the platinum net or the like forming the electrode 4, SO₂ gas or the like in SOx gas is converted into SO₃ gas and SO₃ gas is diffused at inside of the auxiliary electrode layer 3. Further, the electromotive force is generated in accordance with the reversible reaction. A constant relationship is present between the electromotive force and the SO₃ gas concentration and therefore, the SO₃ gas concentration can be measured by measuring the potential difference between the electrode 4 and the reference electrode 5.

According to the solid electrolyte gas sensor explained above, the peripheral edge portion of the board forming the gas sensor main body is supported by being fixedly attached to the end portion of the cylindrical member made of ceramic and is held at inside of a heating atmosphere. Further, the solid electrolyte gas sensor detects a gas component by reacting with a gas to be detected supplied into the cylindrical member. With regard to a way of supporting the gas sensor main body, there has been developed a solid electrolyte gas sensor apparatus for supporting a gas sensor main body at inside of an electric furnace (refer to, for example, Patent Reference 2).

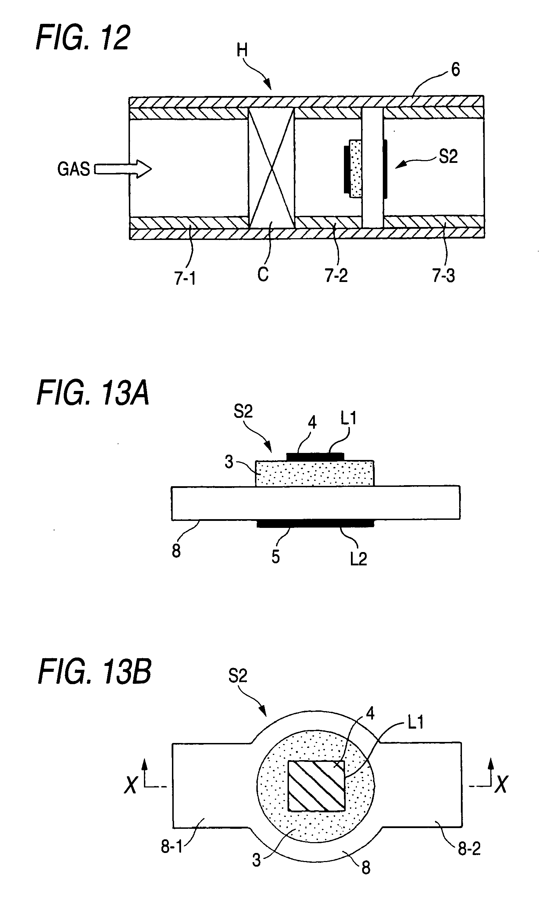

Figs.12 and 13 show a constitution of a solid electrolyte gas sensor apparatus a gas sensor main body of which is supported in an electric furnace. Fig. 12 shows a sectional view of the solid electrolyte gas sensor apparatus, Fig.13 illustrates constitution views of the gas sensor main body integrated to the solid electrolyte gas sensor apparatus.

As shown by Fig.12, a gas sensor main body S2 by a solid electrolyte is held at inside of a furnace vessel 6 of a small-sized electric furnace H. The furnace vessel 6 is made of ceramic and serves as an introducing pipe for introducing a gas to be detected and is provided with the gas sensor main body S2 for measuring a concentration of SO₃ or the like in a gas introduced from an arrow mark direction by way of the introducing pipe. In the case of Fig.12, also a catalyst unit C for oxidizing a gas component is provided on an upstream side of introducing the gas of the gas sensor main body S2. The gas sensor main body S2 and the catalyst unit C are held at predetermined positions by spacers 7-1, 7-2, 7-3 in a cylindrical shape. The spacers may be formed by a ceramics material of zirconia, alumina or the like.

There can be used the catalyst unit C, for example, formed in a shape of a cylinder having a net member (platinum mesh) comprising platinum constituting an oxidation medium, or constituting an oxidation medium by forming stainless steel by a so-to-speak channel structure to be subjected to platinum plating and integrated to inside of the cylindrical member. Further, in the case of the catalyst unit having the platinum mesh, the catalyst unit may be formed by adhering a platinum mesh to each end face of the cylindrical member in a ring-like shape, or may be formed by including the platinum mesh at inside of the cylindrical member in a ring-like shape.

Fig.13 shows details of the gas sensor main body S2 mounted to inside of the furnace vessel 6. Fig. 13A shows a sectional view of the gas sensor main body S2, Fig. 13B shows a top view of the gas sensor main body S2. An X-X section of Fig.13B corresponds to Fig.13A. The gas sensor main body S2 shown here follows a gas detecting principle similar to that of the solid electrolyte gas sensor main body S1 of Fig.11, one face side of a solid electrolyte board 8 comprising yttria stabilized zirconia ceramics constituting a solid electrolyte material in contact with a gas to be detected is provided with a detecting electrode comprising the auxiliary electrode layer 3 and the electrode 4 by a mixture of sulfate including silver sulfate, and other face side of the board 8 in contact with air is provided with the reference electrode 5 comprising platinum. The electrode 4 and the reference electrode 5 are connected with the leads wires L1, L2 and generate an electro motive force by being brought into contact with SO₃ in the gas.

Further, as shown by Fig.13B, a center portion of the solid electrolyte board 8 of the gas sensor main body S2 integrated to the furnace vessel 6 is formed in a shape of a circular plate having a diameter smaller than an inner diameter of the spacer. Further, the solid electrolyte board 8 is provided with board fixing portions 8-1, 8-2 interposed by the spacers 7-2 and 7-3 and held such that the auxiliary electrode layer 3 is disposed at a center of a gas introducing path. The board fixing portions 8-1, 8-2 are integrally formed by a material the same as that of the solid electrolyte board.
[Patent Reference 1] JP-A-10-104197
[Patent Reference 2] JP-A-11-190719

As has been explained above, the gas sensor main body used in the solid electrolyte gas sensor apparatus which has been developed comprises the solid electrolyte board of yttria stabilized zirconia or the like, the one face side of the board is formed with the auxiliary electrode layer for detecting a gas including the electrode, further, the opposed face side is formed with the reference electrode, respectively. Such a gas sensor main body for detecting SOx gas is complicated in a constitution of the sensor, further, formed by the solid electrolyte material and therefore, when the gas sensor main body is mounted to a heating atmosphere of inside of an electric furnace or the like, there poses a problem that heat shock by a rapid temperature rise is applied thereto and the board of the gas sensor main body is destructed. Further, it is difficult to maintain a predetermined measuring temperature unless heating means of a large-scaled electric furnace or the like is used.

Meanwhile, according to the solid electrolyte gas sensor apparatus shown in Fig.11, the gas sensor main body S1 is held by being disposed at the center of the end face portion of the cylindrical member and therefore, the peripheral edge portion of the solid electrolyte board needs a portion of being bonded to the cylindrical member, and in the solid electrolyte gas sensor apparatus shown in Fig. 12, the sensor main body per se needs to be provided with the board fixing portion in order to hold the gas sensor main body S2 at inside of the furnace vessel.

In order to hold the gas sensor main body in the heat atmosphere in this way, it is necessary to prepare the solid electrolyte board having a size larger than an area of the gas detecting electrode layer (auxiliary electrode layer) necessary for detecting the gas. There poses a problem that an increase in the board size not only constitutes a factor of reducing yield by destruction in fabrication but also increases destruction of the board by heat shock by a rapid temperature rise for measuring.

Hence, it is an object of the invention to provide a solid electrolyte gas sensor utilizing a solid electrolyte board, forming a gas sensor main body capable of detecting a sulfur content by a small size, providing a supporting member extended in one side direction at the gas sensor main body, dispensing with a special constitution of holding the sensor main body, enabling to be held easily in a heating atmosphere and simplifying to maintain a measuring temperature related to a gas sensor main body.

### SUMMARY OF THE INVENTION

In order to resolve the above-described problem, according to aspect 1 of the invention, there is provided a solid electrolyte gas sensor including:
a sensor main body having a solid electrolyte board, a gas detecting electrode layer formed at one face of the board, and a reference electrode formed at a face thereof on a side opposed to the one face; and
a supporting member provided at the sensor main body, wherein
the sensor main body is held in a gas to be detected by the supporting member.

According to aspect 2 of the invention, there is provided the solid electrolyte gas sensor according to aspect 1, wherein
the gas detecting electrode layer is surrounded by a ceramic frame member formed on the face of the board.

Further, according to aspect 3 of the invention, there is provided the solid electrolyte gas sensor according to aspect 1 or 2, wherein
the supporting members are a first conductive member rod connected to an electrode embedded in the detecting electrode layer and a second conductive member rod connected to the reference electrode.

According to aspect 4 of the invention, there is provided the solid electrolyte gas sensor according to aspect 1 or 2, wherein
the supporting members are insulating tubes inserted with a first conductive wire connected to an electrode embedded in the detecting electrode layer and a second conductive wire connected to the reference electrode.

According to aspect 5 of the invention, there is provided the solid electrolyte gas sensor according to aspect 2, wherein
the supporting member is a rod-like member integrally formed with the ceramic frame member and extending in one direction.

According to aspect 6 of the invention, there is provided the solid electrolyte gas sensor according to aspect 5, wherein
the rod-like members include a first thin film conductive member connected to an electrode embedded in the detecting electrode layer directly or by way of a connecting wire on one side face of the rod-like member, and a second thin film conductive member connected to the reference electrode directly or by way of a connecting wire on a side face opposed to the side face.

Further, according to aspect 7 of the invention, there is provided the solid electrolyte gas sensor according to aspect 1, wherein
the supporting member is a rod-like member integrally formed with the solid electrolyte board and extending in one direction.

According to aspect 8 of the invention, there is provided the solid electrolyte gas sensor according to aspect 7, wherein
the solid electrolyte rod-like member includes:
a first thin film conductive member connected to an electrode embedded in the detecting electrode layer directly or by way of a connecting wire on one side face of the rod-like member; and
a second thin film conductive member connected to the reference electrode directly or by way of a connecting wire on a side face thereof opposed to the side face.

According to aspect 9 of the invention, there is provided the solid electrolyte gas sensor according to any one of aspects 1 to 8, wherein
the gas sensor main body is arranged in a vessel of a heating furnace supplied with the gas to be detected.

According to aspect 10 of the invention, there is provided the solid electrolyte gas sensor according to any one of aspects 1 to 8, wherein
the gas sensor main body is arranged in a flame or at an upper portion of the flame including a substance to be detected directly or by way of a catalyst member.

As described above, the solid electrolyte gas sensor of the invention includes the sensor main body having the solid electrolyte board, the gas detecting electrode layer formed at the one face of the board, and the reference electrode formed at the face on the side opposed to the one face, and the supporting member provided at the sensor main body, particularly, as the supporting members, the first and second conductive member rods connected to the respective electrodes are adopted, or the insulating tubes for inserting the lead wires are adopted, further, the rod-like members integrally formed with the sensor main body and extended in the one direction are adopted and therefore, the sensor main body is facilitated to be held in the gas to be detected.

Further, according to the solid electrolyte gas sensor of the invention, the solid electrolyte gas sensor is provided with the supporting member capable of downsizing the solid electrolyte gas sensor main body and extended in the one side direction of the sensor main body and therefore, in measurement, there is constituted an atmosphere for maintaining the sensor main body at a measuring temperature, the sensor main body is only inserted into a flow of the gas to be detected, and the sensor main body is facilitated to be held. Therefore, the solid electrolyte gas sensor can simply be placed in a flow of the gas to be detected without needing a special structure of supporting the sensor main body at a furnace vessel of heating means, and the heating means of an electric furnace or the like for maintaining the measuring temperature can be downsized. Further, since the solid electrolyte gas sensor main body can be formed by a small size and therefore, destruction of the board by heat shock in heating can be alleviated, a heating capacity for maintaining the sensor main body at an operating temperature can be reduced, and temperature rise of the sensor main body can be carried out by a short period of time.

Further, according to the solid electrolyte gas sensor of the invention, the gas sensor main body can simply be arranged in an operating atmosphere produced by flame. By only arranging the gas sensor main body in the operating atmosphere by flame, the sensor main body can easily be maintained at a sensor operating temperature in a range of 550°C through 600°C, and SOx gas included in flame can simply be detected.

### BRIEF DESCRIPTION OF THE DRAWINGS

Figs.1A and 1B illustrate views for explaining Example 1 of a first embodiment of a solid electrolyte gas sensor according to the invention.
Fig.2 is a view for explaining Example 2 of the first embodiment.
Fig.3 is a view for explaining an application example when the solid electrolyte gas sensor according to the first embodiment is arranged in an electric furnace.
Figs.4A and 4B illustrate views for explaining Example 3 of a second embodiment of a solid electrolyte gas sensor according to the invention.
Figs. 5A and 5B illustrate views for explaining Example 4 of the second embodiment.
Figs. 6A and 6B illustrate views for explaining Example 5 of the second embodiment.
Fig. 7 is a view for explaining an application example 1 when the solid electrolyte gas sensor according to the embodiment is heated directly by heat of flame.
Fig.8 is a view for explaining application example 2 when the solid electrolyte gas sensor according to the embodiment is heated directly by heat of flame.
Fig.9 is a graph for explaining a change in a sensor output showing a dependency of a solid electrolyte gas sensor in application example 3 on a gas concentration.
Fig.10 is a graph for explaining a change in a sensor output with regard to different gas concentrations in the application example 3.
Fig.11 is a view for explaining an example when a solid electrolyte gas sensor according to background art is installed in a quartz glass tube.
Fig.12 is a view for explaining an example when a solid electrolyte gas sensor according to the background art is installed in an electric furnace.
Figs.13A and 13B illustrate views for explaining the solid electrolyte gas sensor shown in Fig.12.

### DETAILED DESCRIPTION OF THE PREFERRED EMBODIMENTS

### [Embodiment 1]

### (Example 1)

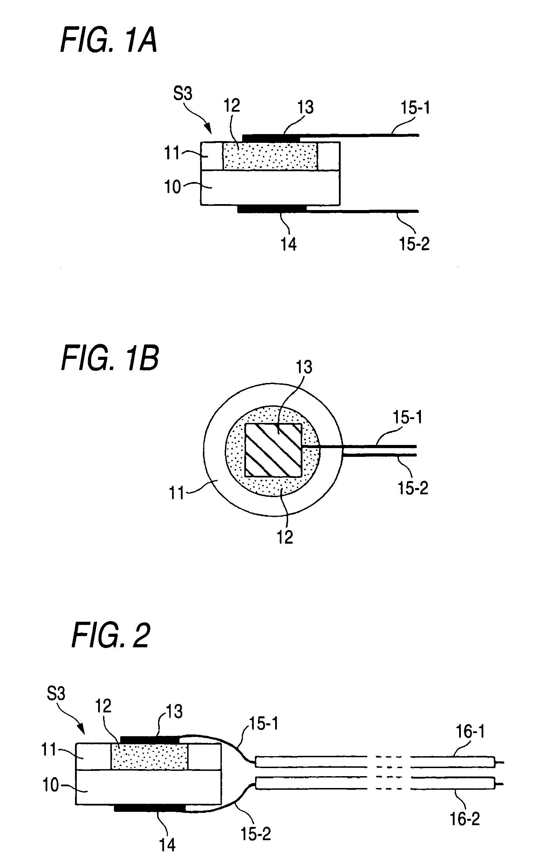

Next, an embodiment related to a solid electrolyte gas sensor according to the invention will be explained in reference to Fig.1 through Fig.7. First, Fig.1 illustrates views for explaining Example 1 of a first embodiment of a solid electrolyte gas sensor according to the invention. Fig.1A shows a sectional view of a gas sensor main body S3 of Example 1, Fig.1B shows a top view of the gas sensor main body S3.

The solid electrolyte gas sensor main body S3 shown in Fig.1 is provided with a constitution similar to that of the gas sensor main body S1 used in the solid electrolyte gas sensor apparatus shown in Fig.11 and follows similar gas detecting principle. The solid electrolyte gas sensor main body S3 shown in Fig.1 differs from the gas sensor main body S1 in that the gas sensor main body S3 is not provided with a peripheral edge portion having a connecting portion for holding the sensor main body, a size of a gas detecting electrode (auxiliary electrode layer) is minimized to a size necessary for-detecting a gas and the sensor main body is downsized.

Hence, when a gas sensor for detecting SOx gas or COx gas is constituted, a ceramic frame member 11 is formed on one face of a solid electrolyte board 10, and a auxiliary electrode layer 12 by sulfate or carbonate is formed at inside of the ceramic frame member 11. Further, an electrode 13 by platinum or the like is provided on the auxiliary electrode layer 12, further, a reference electrode 14 by platinum or the like is provided on other face side of the board 10.

In the gas sensor main body S3 according to Example 1 of the first embodiment, as supporting means for holding the sensor main body in a heating atmosphere, in place of the lead wire L1 connected to the electrode 4 of the gas sensor main body S1 of Fig.11, a first conductive member bolder than the lead wire is fixedly attached to the electrode 13 to constitute a supporting member 15-1, similarly, in place of the lead wire L2 connected to the reference electrode 5 of the gas sensor main body S1, a second conductive member bolder than the lead wire is fixedly attached to the reference electrode 14 to constitute a supporting member 15-2. The first and the second conductive members are formed by heat resistant metal of a platinum wire, a stainless steel wire or the like.

According to the gas sensor main body S3 of Example 1 of the first embodiment, the sensor main body per se is formed by a small size, a light-weighted formation can be achieved, the gas sensor main body S3 can be realized to be held by the supporting members by the first and the second conductive members fixedly attached to the electrode 13 and the reference electrode 14, and the sensor main body can simply be inserted into a flow of a gas to be detected constituting an atmosphere of maintaining the sensor main body at a measuring temperature. Further, the first and the second conductive members can fixedly be attached to the electrode 13 and the reference electrode 14 similar to connection of the lead wires L1 and L2 to the respective electrodes of the solid electrolyte gas sensor main body S1 shown in Fig.11.

Further, in the case of the solid electrolyte gas sensor main body S3 shown in Fig.1, the solid electrolyte gas sensor main body S3 is formed with the ceramic frame member 11 surrounding the auxiliary electrode layer 12, and the ceramic frame member 11 may be formed by a solid electrolyte material the same as that of the board 10 or may be formed by other material. In the case of the solid electrolyte gas sensor main body S3, the case is an example of forming the auxiliary electrode layer 12 by baking a silver paste layer and therefore, the ceramic frame member 11 is needed for convenience of forming the auxiliary electrode layer. Hence, in forming the auxiliary electrode layer 12, when a green sheet method is adopted, the auxiliary electrode layer can be formed by a predetermined shape and therefore, in this case, a surrounding of the auxiliary electrode layer 12 may not be provided with the ceramic frame member 11 similar to the case of the auxiliary electrode layer 3 shown in Fig.13.

In Example 1 of the first embodiment shown in Fig.1, the supporting members 15-1, 15-2 provided at the solid electrolyte gas sensor main body S3 are formed by conductive members and therefore, in holding the sensor main body in the flow of the gas to be detected, an output of the sensor is shortcircuited, or electrically brought into contact with other member to bring about a hindrance in measuring a gas, further, the conductive member constituting the supporting member needs to be bold to amount to an increase in cost.

### (Example 2)

Hence, as Example 2 constituting a modified example of Example 1 of the first embodiment shown in Fig.1, for example, insulating tubes 16-1, 16-2 made of ceramic are arranged and the first conductive member 15-1 and the second conductive member 15-2 are inserted into the respective insulating tubes. By arranging the insulating tubes, a strength of holding the sensor main body can be increased. When the insulating tubes per se are provided with the sufficient supporting strength, the lead wires L1, L2 connected to the respective electrodes shown in Fig.13 can be used for the first and conductive members inserted into the tubes.

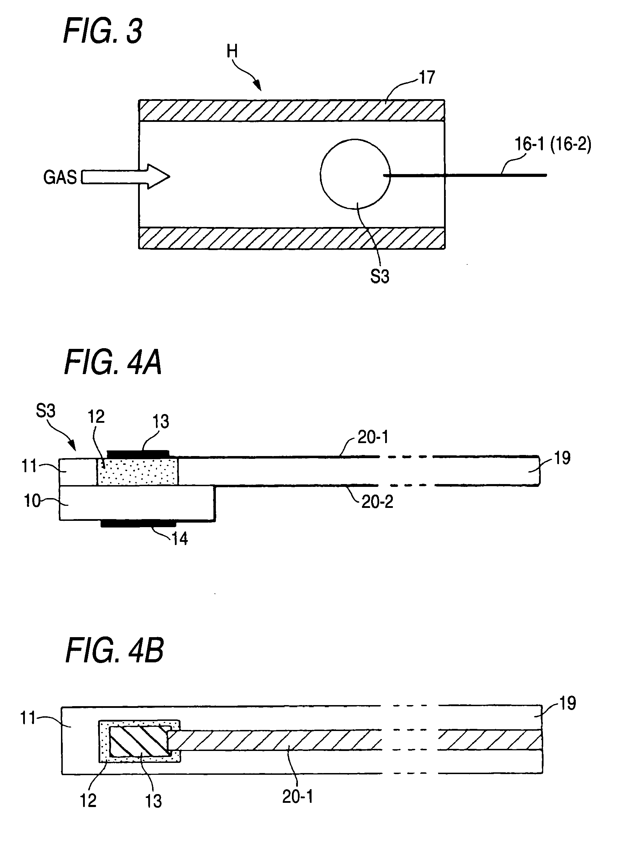

As described above, according to the first embodiment of the solid electrolyte gas sensor of the invention, the solid electrolyte gas sensor main body S3 is downsized and is provided with the supporting member by the conductive member extended in one side direction of the sensor main body and therefore, by only inserting the sensor main body into the flow of the gas to be detected in the atmosphere of maintaining the sensor main body at a measuring temperature, the measurement is carried out and the sensor main body is facilitated to be held. As shown by Fig. 3, the solid electrolyte gas sensor can simply be placed in the flow of the gas to be detected without needing a special structure of supporting the sensor main body in a furnace vessel 17 (a heating apparatus for maintaining the sensor main body at a measuring temperature). Therefore, an electric furnace or the like for maintaining the measuring temperature can be downsized. Further, since the solid electrolyte gas sensor main body S3 can be formed by a small size, destruction of the board by heat shock in heating can be alleviated. Further, a heating capacity for maintaining the sensor main body at an operating temperature can be reduced, and temperature rise of the sensor main body can be carried out in a short period of time. Therefore, reaction time of the sensor can be shortened.

### [Embodiment 2]

According to the solid electrolyte gas sensor by the first embodiment explained above, the supporting members provided to the gas sensor main body are constituted by the conductive members fixedly attached to the respective electrodes of the sensor main body, next, an explanation will be given of a second embodiment constituting a supporting member provided at a gas sensor main body by a material the same as a ceramic material constituting the gas sensor main body in reference to Fig. 4 through Fig. 6

### (Example 3)

Fig.4 shows Example 3 according to a solid electrolyte gas sensor according to a second embodiment. Fig.4A shows a sectional view of a solid electrolyte gas sensor of Example 3, and Fig.4B shows a top view of the solid electrolyte gas sensor. A constitution of the gas sensor main body S3 in the solid electrolyte gas sensor shown in Fig.4 is constructed by a constitution similar to that of the gas sensor main body S3 shown in Fig.1, one face of the solid electrolyte board 10 is formed with the auxiliary electrode layer 12 provided with the electrode 13, and the opposed face is formed with the reference electrode 14. Further, although whereas the gas sensor main body S3 of Fig. 1 is formed in a circular shape, the gas sensor main body S3 of Fig.4 is formed in a rectangular shape, operation of the sensor main body remains unchanged. The auxiliary electrode layer of the gas sensor main body S3 of Fig.4 can also be formed in a circular shape.

According to Example 3 of the second embodiment shown in Fig. 4, a supporting member of the gas sensor main body S3 utilizes the ceramic frame member 11 surrounding the auxiliary electrode layer 12, and is constituted by a supporting member 19 in a rod-like shape integrally formed by a material the same as that of the ceramic frame member 11. Further, thin-film conductive members 20-1, 20-2 provided at side faces of the rod-like supporting member 19 and the solid electrolyte board 10 are used as the lead wires L1, L2 for taking out the output of the gas sensor main body S3. The thin film conductive members are formed by vapor deposition of metal or baking a conducting paste.

In this way, according to the solid electrolyte gas sensor by Example 3 of the second embodiment, the solid electrolyte gas sensor main body S3 can be formed by a small size, the rod-like supporting member extended in one side direction of the sensor main body is provided simultaneously with forming the sensor main body and therefore, in measurement, the sensor main body is only inserted into the flow of the gas to be detected in the atmosphere of maintaining the sensor main body at the measuring temperature and the sensor main body is facilitated to be held. As shown by Fig.3, a special structure of supporting the sensor main body is not needed in the furnace vessel 17, and the sensor main body can simply be placed in the flow of the gas to be detected. Further, steps of fabricating the gas sensor can be simplified and a reduction in cost can be achieved.

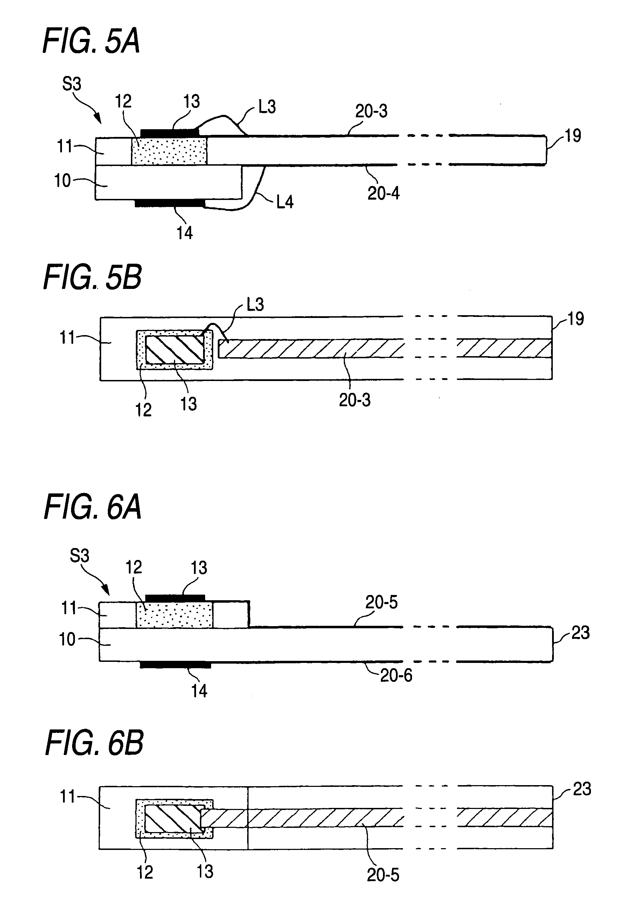

Fig. 4 shows a modified example of Example 3 according to the solid electrolyte gas sensor of the second embodiment shown in Fig.4. Whereas in Fig.4, the thin film conductive members formed at the side faces of the supporting member 19 are brought into direct contact with the respective electrodes, in Fig.5, there is shown Example 4 using lead wires constituting connecting wires in connecting the electrodes and the thin film conductive members.

### (Example 4)

Fig. 5A shows a sectional view of a solid electrolyte gas sensor of Example 4, and Fig.5B shows a top view of the solid electrolyte gas sensor on a side of an auxiliary electrode. Fig. 5 shows an example when the electrode 13 and the thin film conductive member 20-3 are connected by a lead wire L3, and the reference electrode 14 and a thin film conductive member 20-4 provided on a lower side face of the supporting member 19 are connected by a lead wire L4. Further, the lead wire may be used only for connecting either one of the electrode 13 and the reference electrode 14 and the thin film conductive member.

According to the solid electrolyte gas sensors of Examples 3 and 4 of the second embodiment, there is shown a case in which the supporting member provided at the gas sensor main body S3 is formed to be integral with the ceramic frame member 11 of the gas sensor main body S3 and extend in one direction. Hence, next, an explanation will be given of a case of forming a supporting member provided at the gas sensor main body S3 integrally with the solid electrolyte board 10 of the gas sensor main body S3 by the same material in place of integrally forming the supporting member with the ceramic frame member 11.

### (Example 5)

Fig.6 shows a case of forming the supporting member integrally with the solid electrolyte board 10 of the gas sensor main body S3, showing a constitution of a solid electrolyte gas sensor of Example 5 according to the second embodiment. Fig.6A shows a sectional view of the solid electrolyte gas sensor, Fig.6B shows a top view of the solid electrolyte gas sensor. In Fig.6, portions the same as those of the solid electrolyte gas sensors shown in Fig.4 and Fig.5 are attached with the same notations.

The gas sensor main body S3 of the solid electrolyte gas sensor of Example 5 shown in Fig.6 is formed with the auxiliary electrode layer 12 provided with the electrode 13 at one face of the solid electrolyte board 10 and the reference electrode 14 at the opposed face similar to the cases of Examples 3 and 4. Further, although the gas sensor main body S3 of Fig.6 is formed in a rectangular shape, the gas sensor main body S3 may be formed in a circular shape as in the gas sensor main body S3 shown in Fig.1, and operation of the sensor main body remains unchanged.

In the Example 5, a material the same as that of the solid electrolyte board 10 is used for the supporting member of the gas sensor main body S3 and is constituted by a supporting member 23 in a rod-like shape formed integrally with the solid electrolyte board 10 and extended in one side direction. Further, as the leadwires L1, L2 for taking out the output of the gas sensor main body S3, there are used thin film conductive members 20-5, 20-6 provided at side faces of the supporting member 23 in the rod-like shape and the frame member 11. The thin film conductive members are formed by vapor deposition of metal or baking a conductive paste.

In this way, according to the solid electrolyte gas sensor by Example 5 of the second embodiment, similar to the cases of Examples 3 and 4, the solid electrolyte gas sensor main body S3 can be formed by a small size, the supporting member in the rod-like shape extended in one side direction of the sensor main body can be provided simultaneously with forming the sensor main body, the supporting member in the rod-like shape is provided to the gas sensor main body and therefore, in measurement, there is constituted an atmosphere for maintaining the gas sensor main body at the measuring temperature, the gas sensor main body is only inserted into the flow of the gas to be detected, and the gas sensor main body is facilitated to be held.

Further, similar to the case of Fig.3, the solid electrolyte gas sensor main body S3 can simply be placed in the flow of the gas to be detected without needing a special structure of supporting the sensor main body in the furnace vessel 17. Further, steps of fabricating the gas sensor can be simplified and a reduction in cost can be achieved. Further, also in the case of the solid electrolyte gas sensor of Example 5, similar to Example 4 shown in Fig.5, lead wires can be used for connecting the respective electrodes and the thin film conductive members.

The solid electrolyte gas sensors according to the first and the second embodiments explained above need heating means for maintaining the operating temperature and the gas sensor main body is held in the flow of the gas to be detected. As described above, in the gas sensor main body for detecting SOx arranged in the flow of the gas to be detected, as a total of the gas sensor, there is produced the reversible reaction of (2Ag+SO₃+1/20₂) and (Ag₂SO₄), at the auxiliary electrode layer 12, there are produced the reversible reaction of (2Ag) and (2Ag⁺+2e⁻) and the reversible reaction of (SO₃+2Ag⁺+O²⁻) and (Ag₂SO₄), further, at the ceramic board 10 of the solid electrolyte, there is produced the reversible reaction of (1/20₂+2e⁻) and (O²⁻) and the electromotive force is generated between the electrode 13 and the reference electrode 14. By detecting the electromotive force, SO₃ gas in the gas to be detected can be measured.

In such a detecting principle of the gas sensor, when the gas sensor main body is maintained at the operating temperature, SO₃ gas can be measured when there is prepared a condition that SO₃ gas having a component of the gas to be detected is supplied to the auxiliary electrode layer 12, further, oxygen is supplied to the side of the reference electrode 14 of the solid electrolyte board 10. According to the solid electrolyte gas sensors of the first and the second embodiments, in order to operate the gas sensors to detect under such a condition, the gas sensor main body is arranged at inside of the furnace vessel supplied with the flow of the gas to be detected and maintained at the operating temperature.

However, a gas sensor operating atmosphere having the condition of supplying SO₃ gas of the component of the gas to be detected to the auxiliary electrode layer 12 and supplying oxygen to the side of the reference electrode 14 of the solid electrolyte board 10 is not limited to that of the furnace vessel supplied with the flow of the gas to be detected but for example, the atmosphere of operating the gas sensor can easily be formed also by exposing the gas sensor main body directly to flame including the component of the gas to be detected.

### <Application example 1>

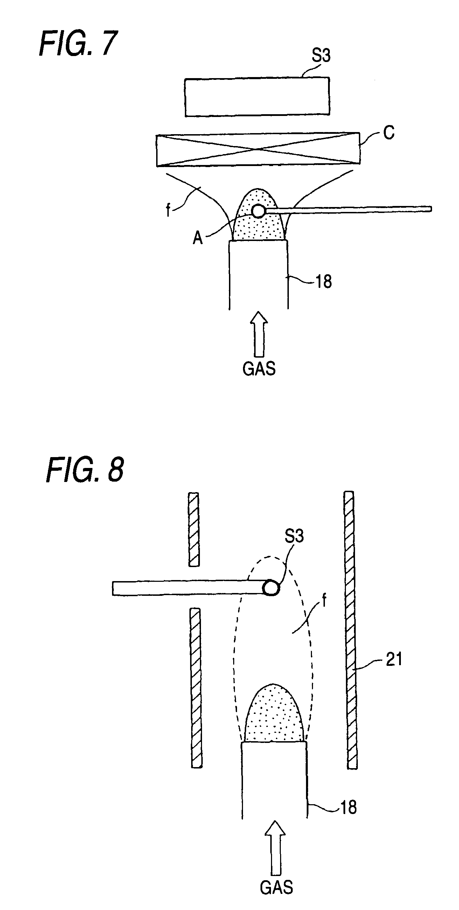

Fig.7 shows application example 1 of the solid electrolyte gas sensor according to the embodiment for detecting SOx gas by arranging the gas sensor main body in an operating atmosphere formed by flame. Although application example 1 shown in Fig.7 is constituted to confirm that SOx gas can be detected by only arranging the gas sensor main body in the operating atmosphere by flame, in order to facilitate the solid electrolyte gas sensor to detect SO₃ gas, a catalyst unit is inserted to be arranged. Further, in order to pseudonically generating SOx gas, as sample A constituting a basis of SOx gas which can be detected by the gas sensor main body, for example, drops of concentrated sulfuric acid are supplied into a flame F by combusting a gas. The flame f is generated by combusting the gas supplied to a burner 18.

In order to generate the flame f for heating the gas sensor main body S3 to about 600°C of the operating temperature, the burner 18 is supplied with a premixed gas including 12% of butane by a total gas flow rate of 400ml/minute and the premixed gas is combusted. Even when the flame f is generated by the combustion, in the case of the application example 1, a sulfur content is not included in the premixed gas and therefore, SOx gas is generated in the flame f by supplying drops of concentrated sulfuric acid to the sample A.

In application example 1 shown in Fig.7, the solid electrolyte gas sensor reacts with SO₃ gas and therefore, the catalyst unit C for oxidizing SOx gas to SO₃ is inserted to be arranged to the side of the auxiliary electrode layer of the gas sensor main body S3. As the catalyst unit C, the catalyst unit used in the solid electrolyte gas sensor apparatus of Fig.12 can be used, for example, a rhodium oxide (Rh₂O₃) catalyst can be adopted.

In the case of the application example 1, it is measured that the gas sensor main body S3 is heated in a range of 550°C through 600°C by the flame f and is maintained at the sensor operating temperature, further, at each time of supplying drops of concentrated sulfuric acid to the sample A, an electromotive force is generated between the electrode 13 and the reference electrode 14. Therefore, it is confirmed that SO₃ gas included in the frame f can be detected. Although here, concentrated sulfuric acid is supplied as the sulfur component, even other liquid, further, a gas or a solid including a sulfur component can similarly be detected.

### <Application example 2>

Although in application example 1 explained above, the oxidation catalyst unit is inserted to be arranged on the side of the flame f of the gas sensor main body S3, Fig.8 shows application example 2 of the solid electrolyte sensor capable of confirming that SOx gas can be detected by only arranging the gas sensor main body in an operating atmosphere by flame. In the case of application example 2, a sulfur component included in flame can be detected by exposing the gas sensor main body S3 directly to flame.

A gas sensor apparatus shown in Fig. 8 includes an insulating vessel 21 having openings on upper and lower sides. The flame f is generated at inside of the insulating vessel 21 by arranging the gas burner 18 at the lower side opening of the insulating vessel 21 and combusting the premixed gas by the gas burner 18. The insulating vessel 21 is useful for maintaining the operating temperature by stabilizing the flame f. The gas sensor main body S3 is inserted into the flame f or at an upper portion thereof from a window provided at a side wall of the insulating vessel 21. Here, the solid electrolyte gas sensor including the gas sensor main body S3 shown in the first and the second embodiments is used.

Further, the oxidation catalyst unit is not inserted to be arranged at the gas sensor apparatus according to application example 2 and therefore, in comparison with the case of application example 1, an amount of heat necessary for maintaining the operating temperature of the solid electrolyte gas sensor is made to be small and therefore, the gas sensor main body can be heated by a small amount of fuel. Although the premixed gas used in the case of application example 1 of Fig.7 includes, for example, 12% of butane, in the case of application example 2, even when the concentration of butane of the premixed gas supplied to the gas burner 18 is about 6%, the sensor operating temperature can be maintained.

Next, an explanation will be given of a result of a verification test in which by only arranging the gas sensor main body according to the invent ion in an operating atmosphere by flame, SOx gas included in the flame can be detected. Although the gas sensor apparatus shown in Fig.8 is constructed by a constitution preferable when applied to a case of including the sulfur content in the gas supplied to the gas burner 18, in the verification test, in order to include the sulfur content in the flame as a gas detecting object, similar to the case of the application example 1 shown in Fig.7, there is adopted a way of inserting a sample including the sulfur content in the flame and generation of SOx gas is simulated in the flame.

Hence, in order to facilitate to insert the sample into the flame, a measuring test is carried out in a state of removing the insulating vessel 21 of the gas sensor apparatus. At this occasion, butane is used in a fuel in a premixed gas, a concentration thereof is 6.5%, and the premixed gas is supplied to the gas burner 18 having an opening of a diameter of 3mm by a flow rate of 400ml per minute.

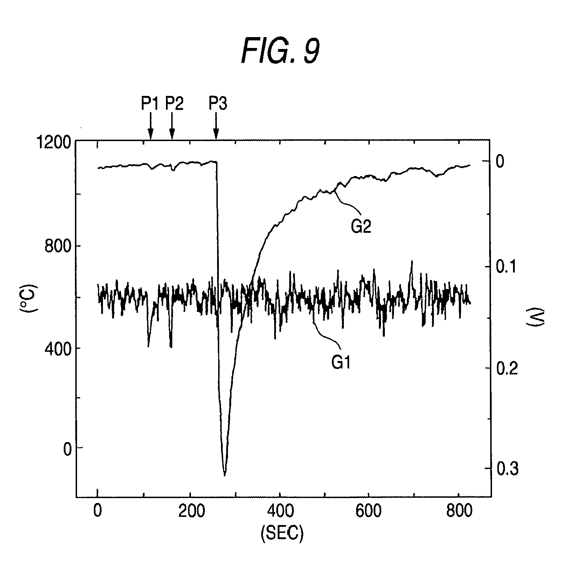

Fig.9 shows an example of a result of the measuring test. A graph shown in Fig.9 shows a temperature change of the gas sensor main body S3 and a change in a sensor output. The abscissa in Fig. 9 designates time (second), the ordinate on a left side designates a temperature (°C), further, the ordinate on a right side designates an electromotive force (V) which is the sensor output.

In Fig. 9, notation G1 designates a graph with regard to the temperature change of the gas sensor main body S3, notation G2 designates a graph with regard to the change in the sensor output. According to the graph G1, the temperature of the gas sensor main body S3 heated by the flame f can be grasped, and it can be confirmed that the temperature is maintained in a range of an operating temperature of the gas sensor main body S3. Further, although a variation is brought about in the graph G1 with regard to the measured temperature, it seems that the variation is brought about since the measuring test is carried out in the state of removing the insulating vessel 21 of the gas sensor apparatus.

On the other hand, in measuring a sen-sflr output, as a sample including a sulfur content, 96% concentrated sulfuric acid is used, a front end of a platinum wire is dipped into concentrated sulfuric acid, and the front end is inserted into the flame f. A test is carried out by using pure water in place of concentrated sulfuric acid in order to compare the output. The graph G2 representing the sensor output shows a result of measurement by two kinds of the samples, at the time points of arrow marks P1, P2, pure water is inserted, at a time point of an arrow mark P3, concentrated sulfuric acid is inserted.

According to the graph G2, whereas in the case of pure water of P1, P2, there is not a conspicuous change in the sensor output, in the case of concentrated sulfuric acid of P3, there is a significant change in the sensor output. It seems therefrom that concentrated sulfuric acid is heated by the flame f and decomposed, SO₂ and SO₃ are generated, the gas sensor main body S3 sensitively reacts with SO₃, and it is known that a dependency of the sensor output on the gas concentration is high. Thereby, it can be confirmed that by only arranging the gas sensor main body according to the invention in the operating atmosphere by the flame, SOx gas included in the flame can be detected.

According to the example of the measuring test with regard to Fig.9, only concentrated sulfuric acid is used as a sample and therefore, a correlation between the concentration of the sulfur content and a signal intensity of the sensor output cannot be known. Hence, sulfuric acid solutions having different concentrations are prepared as samples and a measuring test is carried out by a method the same as that in the case of the measuring test of Fig.9. During the measuring test, the respective sulfuric acid solutions are successively inserted into the flame f at intervals of predetermined time periods. Further, in order to test that there is a correlation between the sensor output and the signal intensity, a condition of inserting the sample is made to be constant. A sample of a constant amount rectified by a microsyringe, for example, each microliter is put into a platinum pan, further, the platinum pan is placed in the flame f by fixing relations of the platinum pan and the gas sensor main body S3 relative to each other.

Fig.10 shows an example of a result of the measuring test. A graph shown in Fig.10 represents a change in the sensor output of the gas sensor main body S3, and the change is shown by graph G2 of the sensor output. Further, a temperature change thereof shows a tendency similar to that of graph G1 shown in Fig. 9 and therefore, a display of a graph of a temperature change is omitted. The abscissa of Fig. 10 designates time (second), further, the ordinate designates an electromotive force (V) which is the sensor output, respectively.

In the measuring test, 0.15%, 0.85%, 6%, 12%, and 24% of sulfuric acid solutions constituted by diluting concentrated sulfuric acid by water are respectively prepared as samples and the respective sulfuric acid solutions are put to the platinum pan from the microsyringe by a constant amount per time. Timings of putting the respective solutions to the platinum pan are designated by arrow marks P1 through P5 in Fig.10. 0.15% sulfuric acid solution is put thereto at arrow mark P1, 0.85% sulfuric acid solution is put thereto at P2, 6% sulfuric acid solution is put thereto at P3, 12% sulfuric acid solution is put thereto at P4, further, 24% sulfuric acid solution is put thereto at P5, respectively.

According to the graph G2 shown in Fig.10, it is known that from Plover to P5, that is, the higher the sulfuric acid concentrations successively, the larger the peak values of the electromotive forces constituting the sensor output. It is known therefrom that sulfuric acid in sulfuric acid solution is heated and decomposed by the flame f, SO₂ and SO₃ are generated, the gas sensor main body S3 sensitively reacts with SO₃, and the electromotive force is outputted by- a high amount in accordance with the concentration of SO₃ in the flame.

It can be confirmed from the results that by only arranging the gas sensor main body according to the invention in the operating atmosphere by the flame, there is a strong correlationship between the concentration of SOx gas included to the flame and the sensor output. Thereby, the gas sensor main body of the invention can measure also the SOx gas concentration in the detected object, for example, the gas sensor main body can be used also for determining whether the SOx gas concentration in the detected object is equal to or larger than a rectified value.

As described above, when the solid electrolyte gas sensor is used, the sulfur content of SOx gas or the like included in flame can be detected and therefore, a sulfur component in a combustion gas which has been difficult to be measured in the background art, for example, an odorant component in propane gas on sale as a gas fuel can be measured. Further, a factor of environment contamination of, for example, CO₂, SOx or the like generated in a procedure of combusting a fossil fuel can directly be measured.

## Claims

1. A solid electrolyte gas sensor comprising:
a sensor main body including a solid electrolyte board, a gas detecting electrode layer formed at one face of the board, and a reference electrode formed at a face thereof on a side opposed to the one face; and
a supporting member provided at the sensor main body, wherein
the sensor main body is held in a gas to be detected by the supporting member.

2. The solid electrolyte gas sensor according to Claim 1, wherein
the gas detecting electrode layer is surrounded by a ceramic frame member formed on the face of the board.

3. The solid electrolyte gas sensor according to Claim 1, wherein
the supporting members are a first conductive member rod connected to an electrode embedded in the detecting electrode layer and a second conductive member rod connected to the reference electrode.

4. The solid electrolyte gas sensor according to Claim 1, wherein
the supporting members are insulating tubes inserted with a first conductive wire connected to an electrode embedded in the detecting electrode layer and a second conductive wire connected to the reference electrode.

5. The solid electrolyte gas sensor according to Claim 2, wherein
the supporting member is a rod-like member integrally formed with the ceramic frame member and extending in one direction.

6. The solid electrolyte gas sensor according to Claim 5, wherein
the rod-like members include a first thin film conductive member connected to an electrode embedded in the detecting electrode layer directly or by way of a connecting wire on one side face of the rod-like member, and a second thin film conductive member connected to the reference electrode directly or by way of a connecting wire on a side face opposed to the side face.

7. The solid electrolyte gas sensor according to Claim 1, wherein
the supporting member is a rod-like member integrally formed with the solid electrolyte board and extending in one direction.

8. The solid electrolyte gas sensor according to Claim 7, wherein
the solid electrolyte rod-like member includes:
a first thin film conductive member connected to an electrode embedded in the detecting electrode layer directly or by way of a connecting wire on one side face of the rod-like member; and
a second thin film conductive member connected to the reference electrode directly or by way of a connecting wire on a side face thereof opposed to the side face.

9. The solid electrolyte gas sensor according to Claim 1, wherein
the gas sensor main body is arranged in a vessel of a heating furnace supplied with the gas to be detected.

10. The solid electrolyte gas sensor according to Claim 1, wherein
the gas sensor main body is arranged in a flame or at an upper portion of the flame including a substance to be detected directly or by way of a catalyst member.

11. The solid electrolyte gas sensor according to Claim 1, wherein
the ceramic frame member is formed by a solid electrolyte material which is the same as that of the board.

12. The solid electrolyte gas sensor according to Claim 1, wherein
the ceramic frame member is formed by material which is different from that of the board.
